# EUROPÄISCHE PATENTSCHRIFT

(11) **EP 4 194 099 B1**
(45) Veröffentlichungstag und Bekanntmachung des Hinweises auf die Patenterteilung: **26.11.2025**
(21) Anmeldenummer: 21212933.2
(22) Anmeldetag: 07.12.2021
(51) Int. Cl.: B05B 9/08, A47J 41/00

(54) **KAPSELHALTER ZUR AUFNAHME EINER GASKAPSEL**
CAPSULE HOLDER FOR HOLDING A GAS CAPSULE
PORTE-CAPSULE DESTINÉ AU LOGEMENT D'UNE CAPSULE À GAZ

(43) Veröffentlichungstag der Anmeldung: 14.06.2023
(73) Patentinhaber: iSi GmbH, 1210 Wien (AT)
(72) Erfinder: Höfferer, Andreas, 1220 Wien (AT); Manojlovic, Daniel, 1220 Wien (AT)
(74) Vertreter: KLIMENT & HENHAPEL

(56) Entgegenhaltungen:
- EP-B1- 3 501 630
- US-A- 2 631 891
- US-A1- 2004 217 198

## Beschreibung

### GEBIET DER ERFINDUNG

Die vorliegende Erfindung betrifft einen Kapselhalter zur Aufnahme einer Gaskapsel für eine Vorrichtung zum Austragen eines Austragsmediums gemäß dem Oberbegriff des Anspruchs 1 sowie eine Vorrichtung mit einem erfindungsgemäßen Kapselhalter gemäß Anspruch 13.

### STAND DER TECHNIK

Die AT 411171 B offenbart eine Vorrichtung zum Erzeugen, Aufbewahren und Ausgeben von in einem Geräteinnenraum befindlichen cremeförmigen Lebensmittel, insbesondere Schlagsahne sowie warmen, aufgeschäumten und saucenförmigen Lebensmitteln, wobei die Vorrichtung sich im Wesentlichen aus einem Behälter mit einem Geräteinnenraum und einem Kopf, welcher als Deckel für den Behälter fungiert, zusammensetzt. Dabei wird der Behälter zu Beginn mit dem jeweiligen zu versprühenden Lebensmittel befüllt und im Anschluss mit dem Kopf verschlossen. Das Lebensmittel bzw. das zu versprühende Medium liegt dabei in flüssiger Form in dem Behälter bzw. im Geräteinnenraum vor. Durch Einbringung eines Gases, vorzugsweise N2O oder CO2, aus einer Gaskapsel in den Geräteinnenraum steigt der Druck im Geräteinnenraum derart, dass die Gasteilchen im Lebensmittel gelöst werden. Bei Entnahme bzw. beim Versprühen expandiert das gelöste Gas. Hierdurch kommt es zu einem Aufschäumen des Lebensmittels bzw. zu einem Überführen des Lebensmittels in einen cremeförmigen bzw. schaum- oder saucenförmigen Zustand. Hierbei dient ein Kapselhalter zur Anordnung der Gaskapsel an der Vorrichtung, um eine fluidische Verbindung der Gaskapsel mit der Vorrichtung herzustellen und zu gewährleisten, wobei der Kapselhalter ein Außengewinde zur Verschraubung mit dem Kopf aufweist.

Dabei ergibt sich das Problem, dass es aufgrund der hohen Drücke in der Gaskapsel zu etwaigen Verletzungen, insbesondere beim Auf- oder Abschrauben des Kapselhalters mit der darin angeordneten Gaskapsel, kommen kann. Diese Gefahr ist speziell bei unzulässiger Verwendung einer falschen Gaskapsel mit höheren Drücken (zumeist von einem anderen Hersteller) möglich, wobei es potentiell auch zu einer Zerstörung des Kapselhalters durch eine durch die Gaskapsel hervorgerufene Druckbelastung kommt. Um solchen Zerstörungen vorzubeugen, sind bekannte Kapselhalter sehr massiv einstückig, insbesondere als Gussteile, ausgebildet, was nachteiligerweise mit einem hohen Gewicht und hohen Kosten einhergeht.

Die US 2004/217198 A1 offenbart ein Farbsprühsystem, bei welchem Farbe mit Hilfe einer Gaspatrone versprüht wird, wodurch sich der Vorteil ergibt, dass das System leichter, kleiner ausgebildet und auch leichter zu handhaben gegenüber herkömmlichen Standgeräten ist. Dabei dient zur Aufnahme der Gaspatrone ein Patronenhalter, in welchem die Gaspatrone erst eingesetzt und im Anschluss mit dem Farbsprühsystem mittels eines Gewindes verschraubt wird, wobei eine Aufnahmebuchse zur Zentrierung der Gaspatrone dient. Im Detail erfolgt beim Aufschrauben des Patronenhalters mittels eines Durchstechschlauches oder einer Durchstechnadel, welche/r in der Aufnahmebuchse angeordnet ist, ein Aufstechen der Gaspatrone, wodurch das Gas aus der Gaspatrone in einen Druckregler fließt.

Die US 2,631,891 A offenbart ein Sprühsystem für Insektenvernichtungsmittel, wobei das Insektenvernichtungsmittel mittels Druckluft aus einer Gaskapsel versprüht wird. Hierbei wird die Gaskapsel in einen einteilig ausgebildeten Gaskapselhalter eingesetzt, und im Anschluss wird der Gaskapselhalter mit einem Verbindungselement verschraubt, wobei das Verbindungselement zur Zentrierung und Abdichtung der Gaskapsel eine Muffe aufweist und die Gaskapsel beim Verschrauben durch die Muffe derart zentriert wird, dass eine Membran der Gaskapsel mittels eines Aufstechstifts aufgestochen wird.

Die EP 3 501 630 B1 offenbart eine Vorrichtung zum Austragen von, vorzugsweise gekühlten, Fluiden, wobei bei Benutzung der Vorrichtung eine Gaskapsel in einen Gaskapselhalter eingesetzt ist. Hierbei ist zur Gewährleistung eines besseren Griffverhaltens der Gaskapselhalter von einer hülsenartig ausgebildeten Gaskapselhalterabdeckung zumindest abschnittsweise mantelflächig umgeben.

### AUFGABE DER ERFINDUNG

Es ist daher eine Aufgabe der Erfindung einen Kapselhalter zu schaffen, durch welchen ein etwaiges Ausfahren einer Gaskapsel aus einer Vorrichtung zum Austragen eines Austragsmediums zuverlässig verhinderbar ist und die oben genannten Nachteile vermieden werden können. Insbesondere sollte der Kapselhalter zur Schonung der Umwelt als auch der Kosten eine einfache Herstellbarkeit und einen geringen Materialeinsatz aufweisen und vorzugsweise geschirrspültauglich ausgebildet sein.

### DARSTELLUNG DER ERFINDUNG

Um die genannte Aufgabe zu lösen ist ein Kapselhalter gemäß Anspruch 1 vorgesehen. Dabei dient der Kapselhalter zur Aufnahme einer Gaskapsel für eine Vorrichtung zum Austragen eines Austragsmediums, insbesondere eines Fluids bzw. von Sprühmedien wie z.B. cremeförmigen Lebensmitteln, insbesondere Schlagsahne sowie warmen, aufgeschäumten und saucenförmigen Lebensmitteln, und/oder Sodawasser. Dabei umfasst der Kapselhalter ein Gaskapselaufnahmeelement mit einer Öffnung zur Aufnahme der Gaskapsel und eine im Wesentlichen hülsenartig ausgebildete Abdeckung die das Gaskapselaufnahmeelement von außen zumindest abschnittsweise umgibt bzw. umschließt. Erfindungsgemäß umfasst der Kapselhalter einen als separates Element ausgebildeten Gewindering mit einem Innengewinde und/oder einem Außengewinde, wobei der Gewindering mit dem Gaskapselaufnahmeelement fest verbunden und im Bereich der Öffnung angeordnet ist, um eine Einführung der Gaskapsel in das Gaskapselaufnahmeelement durch den Gewindering zu ermöglichen, wobei das Gaskapselaufnahmeelement an einer Außenfläche eine Verdrehsicherung, vorzugsweise in Form einer Rändelung, gegen ein Verdrehen relativ zur Abdeckung umfasst. Dadurch ergibt sich im Unterschied zu bisherigen Kapselhaltern, welche einstückig, insbesondere als Gussteil, ausgebildet sind, der Vorteil, dass abschnittsweise wesentlich geringere Wandstärken erforderlich sind, wodurch eine Materialeinsparung und somit eine Gewichts- und Kosteneinsparung realisierbar ist.

Insbesondere kann die Dimensionierung des Gewinderings separat von der Dimensionierung des Gaskapselaufnahmeelements erfolgen.

Der Gewindering ist ein im Wesentlichen ringförmiges Element mit einem Innen- und/oder Außengewinde zur Verschraubung mit einem Kopf der Vorrichtung. Zur Verschraubung kann am Kopf ein Gaskapselstutzen mit einem entsprechenden Gegengewinde für den Gewindering angeordnet sein.

Ausführungsformen des Gewinderings mit Innengewinde und Außengewinde sind denkbar, um eine Verwendung mit unterschiedlichsten Vorrichtungen zum Austragen eines Austragsmediums, genauer eine Verschraubung mit unterschiedlichsten Köpfen von Vorrichtungen zum Austragen eines Austragsmediums, zu ermöglichen.

Gemäß dem oben Gesagten ist der Gewindering so dimensioniert, dass die Gaskapsel durch den Gewindering in das Gaskapselaufnahmeelement einführbar ist, **d.h.** der Gewindering weist einen entsprechend großen lichten Querschnitt auf. Entsprechend kann zum ordnungsgemäßen Einsetzen der Gaskapsel in den Kapselhalter das Innengewinde des Gewinderings einen Gewindedurchmesser bzw. lichten Durchmesser aufweisen, der größer ist als ein Gaskapselaußendurchmesser der Gaskapsel Wenn der Gewindering ein Außengewinde aufweist, so ist jedenfalls ein Durchmesser des lichten Querschnitts größer als der Gaskapselaußendurchmesser. ausgebildet.

Bei einer bevorzugten Ausführungsform des erfindungsgemäßen Kapselhalters ist vorgesehen, dass eine stoff- und/oder formschlüssige Verbindung des Gaskapselaufnahmeelements mit dem Gewindering vorgesehen ist. Den Anforderungen an die Sicherheit kann hierdurch Genüge getan werden, insbesondere durch die Kombination von stoffschlüssiger und formschlüssiger Verbindung.

Bei einer besonders bevorzugten Ausführungsform des erfindungsgemäßen Kapselhalters ist vorgesehen, dass die Verbindung in Form einer Klebung und/oder einer Schweißung und/oder einer Umformung, beispielsweise in Form einer Bördelung oder durch Rollieren, gegeben ist, wodurch eine Materialeinsparung und somit eine Gewichts- und Kosteneinsparung realisierbar ist.

Bei einer bevorzugten Ausführungsform des erfindungsgemäßen Kapselhalters ist vorgesehen, dass die Abdeckung eine Innenfläche umfasst, die dem Gaskapselaufnahmeelement zugewandt ist und das Gaskapselaufnahmeelement von außen vollständig umschließt, wodurch eine größere Grifffläche als auch eine ansprechendere äußere Form, welche beliebig gestaltbar ist, gewährleistet sind.

Bei einer bevorzugten Ausführungsform des erfindungsgemäßen Kapselhalters ist vorgesehen, dass die Abdeckung den Gewindering von außen zumindest abschnittsweise, vorzugsweise vollständig, umschließt. Durch eine derartige Ausbildung der Abdeckung ist kann die ästhetische äußere Form weiter verbessert werden und kann auch die Grifffläche weiter vergrößert werden, was die Handhabung weiter verbessert. Außerdem wäre es denkbar, dass der Gewindering nicht direkt mit dem Gaskapselaufnahmeelement verbunden ist, sondern lediglich indirekt über die Abdeckung, wobei die Abdeckung entsprechend stabil ausgeführt sein kann.

Bei einer bevorzugten Ausführungsform des erfindungsgemäßen Kapselhalters ist vorgesehen, dass das Gaskapselaufnahmeelement den Gewindering von außen zumindest abschnittsweise, vorzugsweise vollständig, umschließt. Hierdurch kann eine besonders hohe mechanische Stabilität gewährleistet werden.

Bei einer bevorzugten Ausführungsform des erfindungsgemäßen Kapselhalters ist vorgesehen, dass der Gewindering zumindest eine Nut umfasst, in welche die Abdeckung und/oder das Gaskapselaufnahmeelement eingreift/eingreifen, wobei neben einer einfachen Verbindungsmöglichkeit von Abdeckung und/oder Gaskapselaufnahmeelement mit dem Gewindering eine Materialeinsparung und somit eine Gewichtsreduktion gegeben ist.

In einem solchen Fall kann zur einfach herzustellenden und gleichzeitig stabilen Verbindung von Gaskapselaufnahmeelement und Gewindering vorgesehen sein, dass das Gaskapselaufnahmeelement einen nach innen weisenden Vorsprung aufweist, der mittels einer außenliegenden Sicke ausgebildet ist, wobei der Vorsprung in Eingriff mit der Nut des Gewinderings ist. Dabei ist der Vorsprung bzw. die Sicke im angeordneten Zustand des Kapselhalters an der Vorrichtung öffnungsseitig, d.h. in Richtung der Vorrichtung, angeordnet.

Alternativ oder zusätzlich kann zur einfach herzustellenden und gleichzeitig stabilen Verbindung von Abdeckung und Gewindering vorgesehen sein, dass die Abdeckung eine im Bereich der Öffnung des Gaskapselaufnahmeelements angeordnete Nase umfasst, welche in Eingriff mit der Nut ist.

Wie bereits geschildert, kann vorgesehen sein, dass das Gaskapselaufnahmeelement den Gewindering von außen zumindest abschnittsweise, vorzugsweise vollständig, umschließt. Alternativ oder zusätzlich ist es möglich, dass die Abdeckung das Gaskapselaufnahmeelement sowie den Gewindering von außen zumindest abschnittsweise umgibt. Wiederum ergeben sich Ausführungsformen, die mechanisch besonders stabil sind und gleichzeitig eine verbesserte Handhabbarkeit sowie ein besonders ansprechendes Äußeres erlauben.

Hierzu ist es bei einer besonders bevorzugten Ausführungsform des erfindungsgemäßen Kapselhalters vorgesehen, dass der Gewindering entlang einer Längsachse des Kapselhalters gesehen ein erstes Ende aufweist, das zum Gaskapselaufnahmeelement weist, sowie ein gegenüberliegendes zweites Ende und dass der Gewindering im Bereich des zweiten Endes eine Umformkante aufweist, wobei die Abdeckung in Eingriff mit der Umformkante ist und diese zumindest abschnittsweise umschließt. Dabei dient die Umformkante, in welche die Abdeckung, vorzugsweise mittels eines Formschlusses, eingreift, als axiale Abzugssicherung, **d.h. es** werden die beim Aufstechen der Gaskapsel entstehenden Kräfte nur vom Gaskapselaufnahmeelement samt Gewindering aufgenommen. Die Abdeckung kann dabei lediglich als Designelement fungieren und kann insbesondere dazu dienen die Haptik, d.h. den Griff, beim Einschrauben der Gaskapsel zu verbessern.

Bei einer bevorzugten Ausführungsform des erfindungsgemäßen Kapselhalters ist vorgesehen, dass die Abdeckung aus Silikon oder Kautschuk oder einem, insbesondere weichen, Kunststoff gefertigt ist. Diese Materialwahl gewährleistet eine besonders angenehme Haptik für den Benutzer.

Zur Steigerung der Funktionssicherheit ist beim erfindungsgemäßen Kapselhalter vorgesehen, dass das Gaskapselaufnahmeelement an einer Außenfläche eine Verdrehsicherung, vorzugsweise in Form einer Rändelung, gegen ein Verdrehen relativ zur Abdeckung umfasst. Insbesondere durch Formschluss kann auf diese Weise eine relative Drehung zwischen Abdeckung und Gaskapselaufnahmeelement zuverlässig verhindert werden.

Unter Außenfläche ist eine nach außen weisende Fläche zu verstehen.

Analog ist zur Steigerung der Funktionssicherheit bei einer bevorzugten Ausführungsform des erfindungsgemäßen Kapselhalters vorgesehen, dass der Gewindering an einer Außenfläche eine Verdrehsicherung, vorzugsweise in Form einer Rändelung, gegen ein Verdrehen relativ zur Abdeckung umfasst. Insbesondere durch Formschluss kann auf diese Weise eine relative Drehung zwischen Abdeckung und Gewindering zuverlässig verhindert werden.

Zur besonders effizienten Erzielung einer Verdrehsicherung mittels eines, vorzugsweise großflächigen, Formschlusses ist bei einer besonders bevorzugten Ausführungsform des erfindungsgemäßen Kapselhalters vorgesehen, dass die Verdrehsicherung des Gaskapselaufnahmeelements und/oder die Verdrehsicherung des Gewinderings in Eingriff mit einer Innenfläche der Abdeckung ist.

Dieser Effekt wird durch die Kraft, welche beim Auf- und Abschrauben durch händisches Zusammendrücken der Abdeckung gegeben ist, verstärkt, weshalb die Abdeckung auch vorzugsweise aus einem weichen Material wie Silikon oder Kautschuk besteht. Auch lässt sich mit einem weicheren Material für die Abdeckung üblicherweise eine bessere Haptik, d.h. ein besseres Griffverhalten, realisieren.

Es sind natürlich auch alternative Ausführungsformen denkbar, bspw. kann die Abdeckung auch aus einem sehr harten Material hergestellt sein, wobei die Innenfläche der hülsenartig ausgebildeten Abdeckung in diesem Fall eine Negativform zu einer Ausbildung, bspw. Rändelung, der Außenfläche des Gaskapselaufnahmeelements aufweist. Hierbei sind natürlich auch etwaige alternative Verbindungsformen der Abdeckung mit dem Gaskapselaufnahmeelement denkbar, bspw. Kleben oder Verschrauben. Auch ist es denkbar, dass die Abdeckung aus einem schrumpfförmigen Material, ähnlich einem Schrumpfschlauch, ausgebildet ist, wodurch bei einem etwaigen Erhitzen der Abdeckung eine feste Verbindung mit dem Gaskapselaufnahmeelement herstellbar ist. Dabei ist es auch denkbar, dass die Abdeckung im Spritzgussverfahren als "Einlegeteil" aufgebracht wird.

In einer weiteren bevorzugten Ausführungsform ist die Abdeckung einstückig ausgebildet, was eine hohe Stabilität sicherstellt.

Um die Festigkeit weiter zu erhöhen und damit eine noch höhere Schutzwirkung zu erzielen, ist erfindungsgemäß das Gaskapselaufnahmeelement als Tiefziehteil, vorzugsweise aus Edelstahl, ausgebildet. Im Detail liegt der Vorteil eines Tiefziehteils darin, dass basierend auf der Kaltverfestigung beim Tiefziehprozess dünnere Wandstärken realisierbar sind, wodurch weniger Material benötigt wird und in Folge geringere Kosten entstehen.

Bei einer bevorzugten Ausführungsform des erfindungsgemäßen Kapselhalters ist vorgesehen, dass der Kapselhalter einen im Wesentlichen kreisförmigen Querschnitt aufweist. Typischerweise kann hierdurch eine besonders kostengünstige Herstellung gewährleistet werden. Es sei angemerkt, dass es technisch natürlich auch denkbar ist, dass der Gewindering, das Gaskapselaufnahmeelement und die Abdeckung grundsätzlich einen beliebigen, beispielsweise einen rechteckförmigen, Querschnitt aufweisen können.

Analog zum oben Gesagten ist weiters eine Vorrichtung zum Austragen eines Austragsmediums bzw. von Fluiden bzw. eines Sprühmediums mit einem erfindungsgemäßen Kapselhalter vorgesehen, umfassend: einen mittels eines Kopfes zu öffnenden und zu verschließenden Behälter, welcher einen Innenraum zur Aufnahme des Austragsmediums ausbildet; einen Gaskapselstutzen, welcher am Kopf angeordnet ist; eine Ausgabetülle, durch welche das Austragsmedium bei Betätigung der Vorrichtung aus dem Innenraum des Behälters austragbar ist sowie ein Bedienelement, vorzugsweise in Form eines Hebels, zur Betätigung der Vorrichtung, wobei eine auswechselbare, mit Gas gefüllte Gaskapsel in dem
Kapselhalter anordenbar ist und der Kapselhalter mit dem Gaskapselstutzen verschraubbar ist, um eine fluidische Verbindung zwischen der Gaskapsel und der Vorrichtung herzustellen und zu gewährleisten.

Mit anderen Worten ist vorgesehen, dass in einem Arbeitszustand der Vorrichtung die Gaskapsel im Kapselhalter gehalten und eine fluidische Verbindung der Gaskapsel mit der Vorrichtung gewährleistet ist, indem die Gaskapsel mittels einer Aufstecheinheit - aufgrund der genannten Verschraubung des Kapselhalters mit dem Gaskapselstutzen - aufgestochen ist, wobei die Gaskapsel einen Gasspeicher ausbildet, der eine Verwendung der Vorrichtung zum Austragen des Austragsmediums ermöglicht, solange ein in der Gaskapsel vorherrschender Gasdruck ausreicht, um beispielsweise einen Druckbegrenzungskolben (als Teil eines Druckbegrenzungsventils) in einen offenen Zustand zu überführen und / oder im offenen Zustand zu halten. Dabei gilt es anzumerken, dass auch Ausführungsformen ohne Druckbegrenzungskolben vorstellbar sind, beispielsweise ein einfaches Rückschlagventil. Auch versteht es sich, dass die Verwendung der Vorrichtung zum Austragen ein Austragsmedium im Innenraum bzw. Geräteinnenraum bedingt, da andernfalls lediglich das Gas ausgetragen wird.

Bei dem einzusetzenden Gas handelt es sich vorzugsweise um Distickstoffoxid (N2O) oder Stickstoff (N2) oder Kohlendioxid (CO2) oder Argon (Ar). Die Angabe eines Gases ist selbstverständlich so zu verstehen, dass mögliche unvermeidbare bzw. vernachlässigbare Verunreinigungen hierin mitumfasst sind. Entsprechend ist erfindungsgemäß ein System umfassend eine erfindungsgemäße Vorrichtung sowie eine auswechselbare, mit Gas gefüllte Gaskapsel vorgesehen, wobei das Gas Distickstoffoxid (N2O) oder Stickstoff (N2) oder Kohlendioxid (CO2) oder Argon (Ar) ist.

Bei einer bevorzugten Ausführungsform des erfindungsgemäßen Systems ist vorgesehen, dass in einem verschlossenen Zustand der Gaskapsel das Gas einen Druck von 50 bar bis 200 bar aufweist, wobei abhängig von der Bauform der Gaskapsel auch höhere Drücke vorstellbar sind.

Die Gaskapsel kann - muss jedoch nicht - während der bestimmungsgemäßen Verwendung der Vorrichtung mit dieser fluidisch verbunden und im Kapselhalter gehalten bleiben. Nachdem sämtliches Austragsmedium ausgetragen und die Vorrichtung komplett drucklos ist, wird man in der Praxis jedoch spätestens die Gaskapsel entfernen.

### KURZE BESCHREIBUNG DER FIGUREN

Die Erfindung wird nun anhand von Ausführungsbeispielen näher erläutert. Die Figuren sind beispielhaft und sollen den Erfindungsgedanken zwar darlegen, ihn aber keinesfalls einengen oder gar abschließend wiedergeben. Auch sind aus den Figuren weitere vorteilhafte Ausgestaltungen, Einzelheiten und Weiterbildungen der Erfindung zu entnehmen. Dabei zeigt:
- Fig. 1: eine Schnittdarstellung einer Vorrichtung mit einer ersten Ausführungsform eines erfindungsgemäßen Kapselhalters;
- Fig. 2: eine vergrößerte Detaildarstellung der Vorrichtung aus Fig. 1;
- Fig. 3a: eine Schnittdarstellung der ersten Ausführungsform des erfindungsgemäßen Kapselhalters;
- Fig. 3b: eine Schnittdarstellung gemäß Fig. 3a, jedoch ohne Abdeckung;
- Fig. 4a: eine Schnittdarstellung einer zweiten Ausführungsform des erfindungsgemäßen Kapselhalters;
- Fig. 4b: eine Schnittdarstellung gemäß Fig. 4a, jedoch ohne Abdeckung;
- Fig. 4c: eine Seitenansicht zu Fig. 4b;
- Fig. 5a: eine Schnittdarstellung einer dritten Ausführungsform des erfindungsgemäßen Kapselhalters;
- Fig. 5b: eine Schnittdarstellung gemäß Fig. 5a, jedoch ohne Abdeckung;
- Fig. 6a: eine Schnittdarstellung einer vierten Ausführungsform des erfindungsgemäßen Kapselhalters;
- Fig. 6b: eine Schnittdarstellung gemäß Fig. 6a, jedoch ohne Abdeckung;

### WEGE ZUR AUSFÜHRUNG DER ERFINDUNG

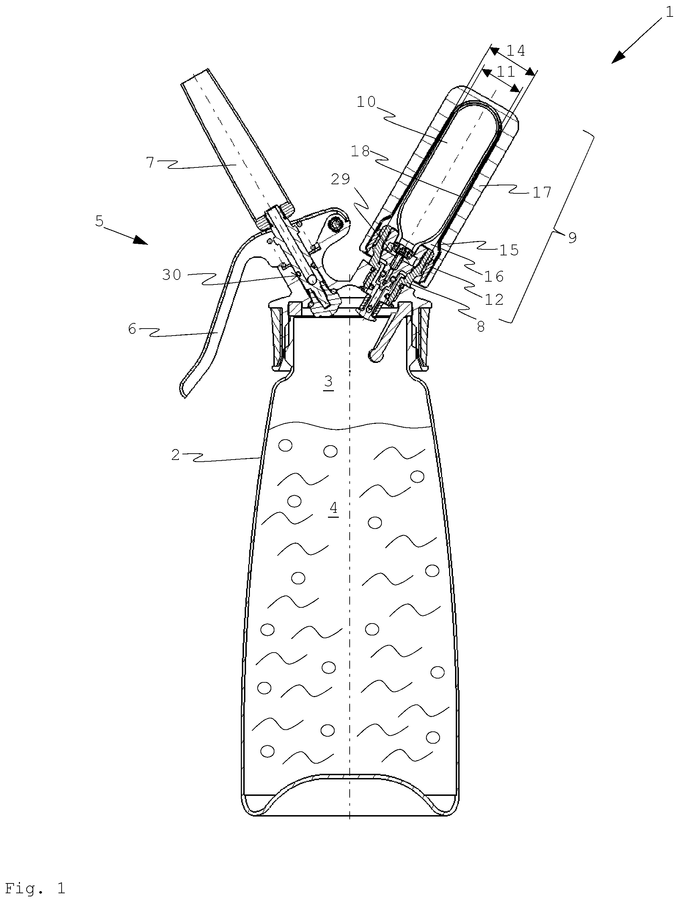

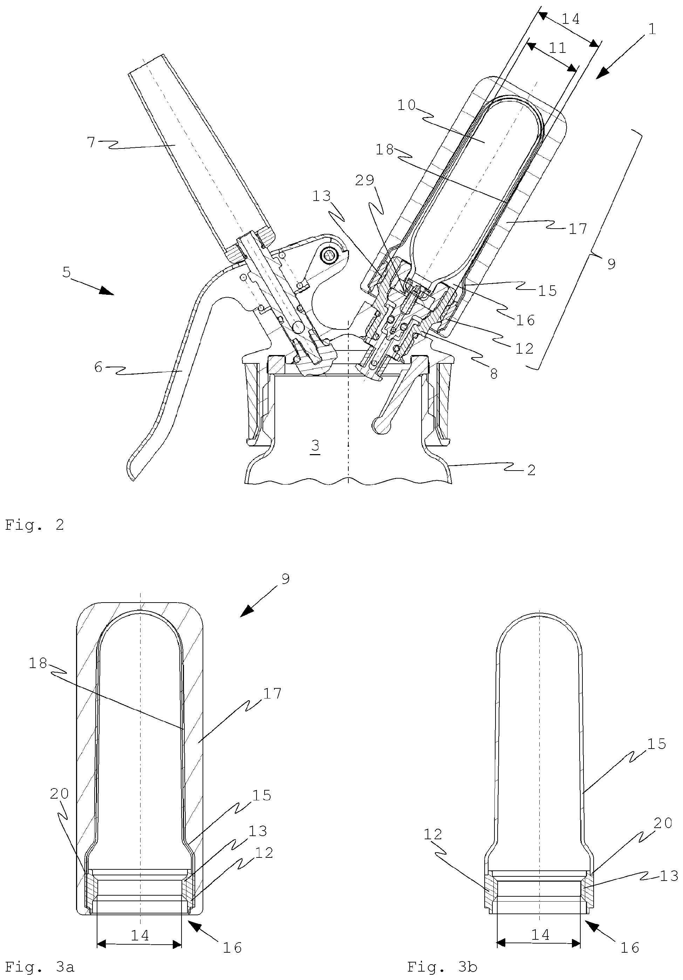

Fig. 1 sowie Fig. 2 zeigen eine Schnittdarstellung einer Vorrichtung 1 zum Austragen eines Austragsmediums 4 bzw. Fluids bzw. Sprühmediums mit einer ersten Ausführungsform eines erfindungsgemäßen Kapselhalters 9. Die Vorrichtung 1 umfasst einen Behälter 2, welcher einen Innenraum 3 zur Aufnahme des Austragsmediums 4 ausbildet, einen Kopf 5 zum Verschließen des Behälters 2, den Kapselhalter 9 zur Aufnahme einer Gaskapsel 10, ein Bedienelement 6, welches vorzugsweise in Form eines Hebels oder eines Druckknopfs ausgebildet ist, sowie eine Ausgabetülle 7.

Des Weiteren umfassen derartige Vorrichtungen bzw. umfasst die Vorrichtung 1 zur ordnungsgemäßen Funktion eine Aufstecheinheit 29 für die Gaskapsel 10, um eine Membran der Gaskapsel 10 aufzustechen, wenn die Gaskapsel 10 im Kapselhalter 9 angeordnet ist und der Kapselhalter 9 mit dem Kopf 5, genauer mit einem am Kopf 5 angeordneten Gaskapselstutzen 8 verschraubt wird, um eine fluidische Verbindung zwischen der Gaskapsel 10 und der Vorrichtung 1 herzustellen und zu gewährleisten. Weiters umfassen derartige Vorrichtungen bzw. umfasst die Vorrichtung 1 zur ordnungsgemäßen Funktion ein Entnahmesystem (Entnahmeventil 30) zur kontrollierten Ausgabe.

Dabei weist der Kapselhalter 9 einen Gewindering 12 auf, mit dem der Kapselhalter 9 mit dem Gaskapselstutzen 8 verschraubbar ist, wobei der Gewindering 12 hierfür im gezeigten Ausführungsbeispiel ein Innengewinde 13 aufweist dessen (lichter) Gewindedurchmesser 14 größer als ein Gaskapselaußendurchmesser 11 ist, wodurch die Gaskapsel 10 in den Kapselhalter 9 durch den Gewindering 12 hindurch einsetzbar ist. Im Detail ist die Gaskapsel 10 in ein Gaskapselaufnahmeelement 15 des Kapselhalters 9 einsetzbar, wobei zur einfacheren und besseren Handhabbarkeit das Gaskapselaufnahmeelement 15 von einer Abdeckung 17 zumindest teilweise umgeben ist. Dabei kontaktiert das Gaskapselaufnahmeelement 15 eine Innenfläche 18 der Abdeckung 17.

Fig. 3a und Fig. 3b zeigen jeweils eine detaillierte Schnittdarstellung der ersten Ausführungsform des erfindungsgemäßen Kapselhalters 9, wobei die Abdeckung 17 das Gaskapselaufnahmeelement 15 und auch den Gewindering 12 von außen vollkommen umgibt. Hierbei zeigt Fig. 3b keine Abdeckung 17 zum besseren Verständnis. Im Detail ist das Gaskapselaufnahmeelement 15 in die Abdeckung 17 eingesetzt und weist eine Öffnung 16 zur Aufnahme bzw. zum Einführen der Gaskapsel 10 auf. Im Bereich der Öffnung 16 ist der Gewindering 12 angeordnet, wobei dieser mit dem Gaskapselaufnahmeelement 15 in einem Verbindungsbereich 20 fest mittels Formschluss und/oder Stoffschluss verbunden ist. Beispielsweise kann die Verbindung mittels Kleben, Schweißen oder dergleichen realisiert sein.

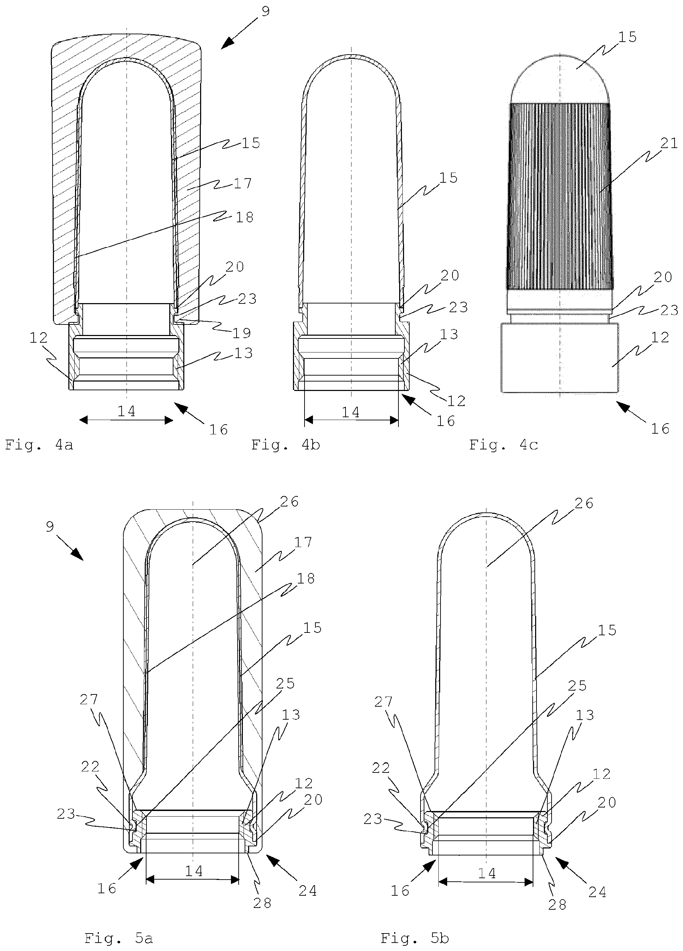

Fig. 4a und Fig. 4b (ohne Abdeckung 17) zeigen eine Schnittdarstellung einer zweiten Ausführungsform des erfindungsgemäßen Kapselhalters 9, wobei die Abdeckung 17 das Gaskapselaufnahmeelement 15 vollständig und den Gewindering 12 lediglich teilweise umgibt. Dabei weist die Abdeckung 17 eine Nase 19 auf, welche in eine Nut 23 des Gewinderinges 12 eingreift, wobei die Nut 23 gegenüber der Öffnung 16 kapselhalterendseitig angeordnet ist, sodass zumindest ein Teilbereich des Gewinderings 12 nicht von der Abdeckung 17 umschlossen ist.

Fig. 4c zeigt in einer Aufsicht das Gaskapselaufnahmeelement 15, wobei an einer Außenfläche des Gaskapselaufnahmeelements 15 eine Verdrehsicherung 21 in Form einer Rändelung vorgesehen ist. Die Verdrehsicherung 21 des Gaskapselaufnahmeelements 15 kann dabei in Eingriff mit der Innenfläche 18 der hülsenartig ausgebildeten Abdeckung 17 stehen, insbesondere bei Benutzung des Kapselhalters **9.**

Fig. 5a und Fig. 5b (ohne Abdeckung 17) zeigen eine Schnittdarstellung einer dritten Ausführungsform des erfindungsgemäßen Kapselhalters 9, wobei der Gewindering 12 ebenso die Nut 23 aufweist, welche jedoch in etwa mittig des Gewinderings 12 angeordnet ist, und in welche Nut 23 ein nach innen weisender Vorsprung 25 des Gaskapselaufnahmeelements 15 eingreift. Der nach innen weisende Vorsprung 25 ist dabei durch eine außenliegende Sicke 22 des Gaskapselaufnahmeelements 15 ausgebildet. Dabei ist es zusätzlich vorgesehen, dass das Gaskapselaufnahmeelement 15 mit dem Gewindering 12 im Verbindungsbereich 20 verbunden ist, wobei die Verbindung gemäß obigen Erläuterungen mittels Kleben, Schweißen oder dergleichen realisierbar **ist.**

Zusätzlich ist es gemäß Fig. 5a möglich, dass der Gewindering 12 eine Umformkante 24 umfasst, die im Bereich eines zweiten Endes 28 des Gewinderings 12 angeordnet ist, wobei der Gewindering entlang einer Längsachse 26 des Kapselhalters gesehen ein erstes Ende 27 aufweist, das zum Gaskapselaufnahmeelement 15 weist, sowie das gegenüberliegende zweite Ende 28. Die Abdeckung 17 ist in Eingriff mit der Umformkante 24 und umschließt diese zumindest abschnittsweise.

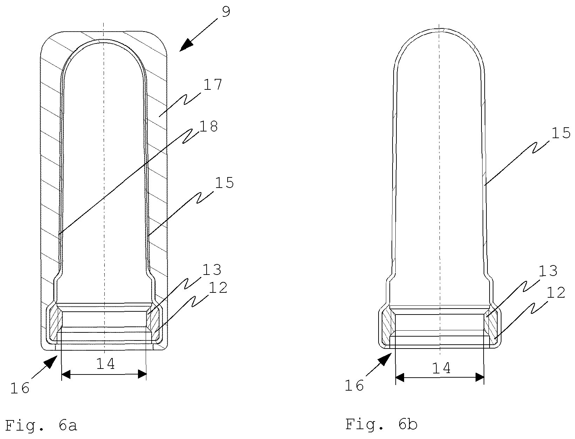

Fig. 6a und Fig. 6b (ohne Abdeckung 17) zeigen eine Schnittdarstellung einer vierten Ausführungsform des erfindungsgemäßen Kapselhalters 9, wobei die Innenfläche 18 der Abdeckung 17 das Gaskapselaufnahmeelement 15 von außen vollständig umschließt und dieses wiederum den Gewindering 12 von außen vollständig umschließt.

### BEZUGSZEICHENLISTE

- 1: Vorrichtung;
- 2: Behälter;
- 3: Innenraum;
- 4: Austragsmedium;
- 5: Kopf;
- 6: Bedienelement;
- 7: Ausgabetülle;
- 8: Gaskapselstutzen;
- 9: Kapselhalter;
- 10: Gaskapsel;
- 11: Gaskapselaußendurchmesser;
- 12: Gewindering;
- 13: Innengewinde;
- 14: Gewindedurchmesser;
- 15: Gaskapselaufnahmeelement;
- 16: Öffnung des Gaskapselaufnahmeelements;
- 17: Abdeckung;
- 18: Innenfläche der Abdeckung;
- 19: Nase der Abdeckung;
- 20: Verbindungsbereich;
- 21: Verdrehsicherung;
- 22: Sicke des Gaskapselaufnahmeelements;
- 23: Nut des Gewinderings;
- 24: Umformkante des Gewinderings;
- 25: Vorsprung des Gaskapselaufnahmeelements;
- 26: Längsachse des Kapselhalters;
- 27: Erstes Ende des Gewinderings;
- 28: Zweites Ende des Gewinderings;
- 29: Aufstecheinheit;
- 30: Entnahmeventil;

## Patentansprüche

1. Kapselhalter (9) zur Aufnahme einer Gaskapsel (10) für eine Vorrichtung (1) zum Austragen eines Austragsmediums (4), wobei der Kapselhalter (9) ein Gaskapselaufnahmeelement (15) mit einer Öffnung (16) zur Aufnahme der Gaskapsel (10) umfasst und eine im Wesentlichen hülsenartig ausgebildete Abdeckung (17), die das Gaskapselaufnahmeelement (15) von außen zumindest abschnittsweise umgibt, **dadurch gekennzeichnet, dass** der Kapselhalter (9) einen als separates Element ausgebildeten Gewindering (12) mit einem Innengewinde (13) und/oder einem Außengewinde umfasst, wobei der Gewindering (12) mit dem Gaskapselaufnahmeelement (15) fest verbunden und im Bereich der Öffnung (16) angeordnet ist, um eine Einführung der Gaskapsel (10) in das Gaskapselaufnahmeelement (15) durch den Gewindering (12) zu ermöglichen, wobei das Gaskapselaufnahmeelement (15) an einer Außenfläche eine Verdrehsicherung (21), vorzugsweise in Form einer Rändelung, gegen ein Verdrehen relativ zur Abdeckung (17) umfasst.

2. Kapselhalter (9) nach Anspruch 1, **dadurch gekennzeichnet, dass** eine stoff- und/oder formschlüssige Verbindung (20) des Gaskapselaufnahmeelements (15) mit dem Gewindering (12) vorgesehen ist.

3. Kapselhalter (9) nach Anspruch 2, **dadurch gekennzeichnet, dass** die Verbindung in Form einer Klebung und/oder einer Schweißung und/oder einer Umformung gegeben ist.

4. Kapselhalter (9) nach einem der Ansprüche 1 bis 3, **dadurch gekennzeichnet, dass** die Abdeckung (17) eine Innenfläche (18) umfasst, die dem Gaskapselaufnahmeelement (15) zugewandt ist und das Gaskapselaufnahmeelement (15) von außen vollständig umschließt.

5. Kapselhalter (9) nach einem der Ansprüche 1 bis 4, **dadurch gekennzeichnet, dass** die Abdeckung (17) den Gewindering (12) von außen zumindest abschnittsweise, vorzugsweise vollständig, umschließt.

6. Kapselhalter (9) nach einem der vorhergehenden Ansprüche, **dadurch gekennzeichnet, dass** der Gewindering (12) zumindest eine Nut (23) umfasst, in welche die Abdeckung (17) und/oder das Gaskapselaufnahmeelement (15) eingreift/eingreifen.

7. Kapselhalter (9) nach Anspruch 6, **dadurch gekennzeichnet, dass** das Gaskapselaufnahmeelement (15) einen nach innen weisenden Vorsprung (25) aufweist, der mittels einer außenliegenden Sicke (22) ausgebildet ist, wobei der Vorsprung (25) in Eingriff mit der Nut (23) des Gewinderings (12) ist.

8. Kapselhalter (9) nach einem der Ansprüche 6 bis 7, **dadurch gekennzeichnet, dass** die Abdeckung (17) eine im Bereich der Öffnung (16) des Gaskapselaufnahmeelements (15) angeordnete Nase (19) umfasst, welche in Eingriff mit der Nut (23) des Gewinderings (12) ist.

9. Kapselhalter (9) nach einem der vorhergehenden Ansprüche, **dadurch gekennzeichnet, dass** das Gaskapselaufnahmeelement (15) den Gewindering (12) von außen zumindest abschnittsweise, vorzugsweise vollständig, umschließt.

10. Kapselhalter (9) nach einem der vorhergehenden Ansprüche, **dadurch gekennzeichnet, dass** die Abdeckung (17) den Gewindering (12) von außen zumindest abschnittsweise umgibt, dass der Gewindering (12) entlang einer Längsachse (26) des Kapselhalters (9) gesehen ein erstes Ende (27) aufweist, das zum Gaskapselaufnahmeelement (15) weist, sowie ein gegenüberliegendes zweites Ende (28) und dass der Gewindering (12) im Bereich des zweiten Endes (28) eine Umformkante (24) aufweist, wobei die Abdeckung (17) in Eingriff mit der Umformkante (24) ist und diese zumindest abschnittsweise umschließt.

11. Kapselhalter (9) nach einem der vorhergehenden Ansprüche, **dadurch gekennzeichnet, dass** der Gewindering (12) an einer Außenfläche eine Verdrehsicherung, vorzugsweise in Form einer Rändelung, gegen ein Verdrehen relativ zur Abdeckung (17) umfasst.

12. Kapselhalter (9) nach einem der Ansprüche 1 bis 11, **dadurch gekennzeichnet, dass** die Verdrehsicherung (21) des Gaskapselaufnahmeelements (15) und/oder die Verdrehsicherung des Gewinderings (12) in Eingriff mit einer Innenfläche (18) der Abdeckung (17) ist.

13. Vorrichtung (1) zum Austragen eines Austragsmediums (4) mit einem Kapselhalter (9) nach einem der Ansprüche 1 bis 12, umfassend:
• einen mittels eines Kopfes (5) zu öffnenden und zu verschließenden Behälter (2), welcher einen Innenraum (3) zur Aufnahme des Austragsmediums (4) ausbildet;
• einen Gaskapselstutzen (8), welcher am Kopf (5) angeordnet ist;
• eine Ausgabetülle (7), durch welche das Austragsmedium (4) bei Betätigung der Vorrichtung (1) aus dem Innenraum (3) des Behälters (2) austragbar ist sowie
• ein Bedienelement (6), vorzugsweise in Form eines Hebels, zur Betätigung der Vorrichtung (1),
wobei eine auswechselbare, mit Gas gefüllte Gaskapsel (10) in dem Kapselhalter (9) anordenbar ist und der Kapselhalter (9) mit dem Gaskapselstutzen (8) verschraubbar ist, um eine fluidische Verbindung zwischen der Gaskapsel (10) und der Vorrichtung (1) herzustellen und zu gewährleisten.

14. System umfassend eine Vorrichtung (1) nach Anspruch 13 sowie eine auswechselbare, mit Gas gefüllte Gaskapsel (10), wobei das Gas Distickstoffoxid (N2O) oder Stickstoff (N2) oder Kohlendioxid (CO2) oder Argon (Ar) ist.

## Claims

1. Capsule holder (9) for holding a gas capsule (10) for an apparatus (1) for output of an output medium (4), wherein the capsule holder (9) comprises a gas capsule holder element (15) with an opening (16) for holding the gas capsule (10) and an essentially sleeve-like cover (17) exteriorly surrounding at least certain sections of the gas capsule holder element (15), **characterized in that** the capsule holder (9) comprises a threaded ring (12) configured as a separate element and comprising an inside thread (13) and/or an outside thread, wherein the threaded ring (12) is firmly connected with the gas capsule holder element (15) and is arranged in the region of the opening (16), in order to permit introduction of the gas capsule (10) into the gas capsule holder element (15) through the threaded ring (12), wherein the gas capsule holder element (15) comprises an anti-rotation securing device (21), preferably in the form of a knurling, on an outer surface to prevent rotation relative to the cover (17).

2. Capsule holder (9) according to claim 1, **characterized in that** the gas capsule holder element (15) is connected with the threaded ring (12) with a material-fit connection and/or a shape-fit connection (20).

3. Capsule holder (9) according to claim 2, **characterized in that** the connection is in the form of a glue connection and/or a welding and/or a forming connection.

4. Capsule holder (9) according to one of claims 1 to 3, **characterized in that** the cover (17) comprises an inner surface (18) which faces the gas capsule holder element (15) and exteriorly encloses the gas capsule holder element (15) completely.

5. Capsule holder (9) according to one of claims 1 to 4, **characterized in that** the cover (17) exteriorly encloses the threaded ring (12) at least in certain sections, preferably completely.

6. Capsule holder (9) according to one of the preceding claims, **characterized in that** the threaded ring (12) comprises at least one groove (23), into which the cover (17) and/or the gas capsule holder element (15) engages/engage.

7. Capsule holder (9) according to claim 6, **characterized in that** the gas capsule holder element (15) has a projection (25) which faces inwardly and is formed by an exterior bead (22), wherein the projection (25) is in engagement with the groove (23) of the threaded ring (12).

8. Capsule holder (9) according to one of claims 6 to 7, **characterized in that** the cover (17) comprises a nose (19) arranged in the region of the opening (16) of the gas capsule holder element (15), which nose is in engagement with the groove (23) of the threaded ring (12).

9. The capsule holder (9) according to one of the preceding claims, **characterized in that** the gas capsule holder element (15) exteriorly encloses the threaded ring (12) at least in certain sections, preferably completely.

10. Capsule holder (9) according to one of the preceding claims,
**characterized in that** the cover (17) exteriorly surrounds the threaded ring (12) at least in certain sections,
that the threaded ring (12) has a first end (27), seen along a longitudinal axis (26) of the capsule holder (9), which first end (27) faces the gas capsule holder element (15), and a second end (28) opposite the first end (27),
and that the threaded ring (12) has a formed edge (24) in the region of the second end (28), wherein the cover (17) is in engagement with the formed edge (24) and encloses the formed edge (24) at least in certain sections.

11. Capsule holder (9) according to one of the preceding claims, **characterized in that** the threaded ring (12) comprises an anti-rotation securing device, preferably in the form of a knurling, on an outer surface to prevent rotation relative to the cover (17).

12. Capsule holder (9) according to one of claims 1 to 11, **characterized in that** the anti-rotation securing device (21) of the gas capsule holder element (15) and/or the anti-rotation securing device of the threaded ring (12) is in engagement with an inner surface (18) of the cover (17).

13. Apparatus (1) for output of an output medium (4) with a capsule holder (9) according to one of claims 1 to 12, comprising:
a container (2) having a head (5) for opening and closing the container (2), wherein the container forms an interior (3) to hold the output medium (4);
a gas capsule connector (8), which is arranged on the head (5);
an output spout (7), through which the output medium (4) can be output from the interior (3) of the container (2) when the apparatus (1) is operated and
an operating element (6), preferably in the form of a lever, for operating the apparatus (1),
wherein the capsule holder (9) is configured to receive a replaceable gas capsule (10), filled with gas, and the capsule holder (9) is configured to be screwed with the gas capsule connector (8), so as to produce and guarantee a fluidic connection between the gas capsule (10) and the apparatus (1).

14. System comprising an apparatus (1) according to claim 13 and a replaceable gas capsule (10) filled with gas, wherein the gas is di-nitrogen oxide (N2O) or nitrogen (N₂) or carbon dioxide (CO₂) or argon (Ar).

## Revendications

1. Porte-capsule (9) destiné à la réception d'une capsule de gaz (10) pour un dispositif (1) permettant de décharger un milieu de décharge (4), dans lequel le porte-capsule (9) comprend un élément de réception de capsule de gaz (15) avec un orifice (16) pour la réception de la capsule de gaz (10) et un couvercle (17), conçu sensiblement en forme de gaine, qui entoure au moins partiellement l'élément de réception de capsule de gaz (15) par l'extérieur, **caractérisé en ce que** le porte-capsule (9) comprend une bague filetée (12) conçue sous forme d'un élément séparé avec un filetage intérieur (13) et/ou un filetage extérieur, dans lequel la bague filetée (12) est solidement reliée avec l'élément de réception de capsule de gaz (15) et est disposée dans la région de l'orifice (16), afin de permettre une introduction de la capsule de gaz (10) dans l'élément de réception de capsule de gaz (15) à travers la bague filetée (12), dans lequel l'élément de réception de capsule de gaz (15) comprend sur une surface extérieure un dispositif anti-rotation (21), de préférence sous forme d'un moletage, contre une rotation par rapport au couvercle (17).

2. Porte-capsule (9) selon la revendication 1, **caractérisé en ce qu'**une liaison (20) par complémentarité de matière et/ou de forme de l'élément de réception de capsule de gaz (15) avec la bague filetée (12) est prévue.

3. Porte-capsule (9) selon la revendication 2, **caractérisé en ce que** la liaison est assurée sous forme d'un collage et/ou d'une soudure et/ou d'un remodelage.

4. Porte-capsule (9) selon l'une des revendications 1 à 3, **caractérisé en ce que** le couvercle (17) comprend une surface intérieure (18) qui est orientée vers l'élément de réception de capsule de gaz (15) et entoure totalement l'élément de réception de capsule de gaz (15) par l'extérieur.

5. Porte-capsule (9) selon l'une des revendications 1 à 4, **caractérisé en ce que** le couvercle (17) entoure la bague filetée (12) par l'extérieur au moins partiellement, de préférence totalement.

6. Porte-capsule (9) selon l'une des revendications précédentes, **caractérisé en ce que** la bague filetée (12) comprend au moins une rainure (23) dans laquelle se met en prise/se mettent en prise le couvercle (17) et/ou l'élément de réception de capsule de gaz (15).

7. Porte-capsule (9) selon la revendication 6, **caractérisé en ce que** l'élément de réception de capsule de gaz (15) présente une saillie (25) orientée vers l'intérieur qui est formée au moyen d'une nervure (22) située à l'extérieur, dans lequel la saillie (25) est en prise avec la rainure (23) de la bague filetée (12).

8. Porte-capsule (9) selon l'une des revendications 6 à 7, **caractérisé en ce que** le couvercle (17) comprend une proéminence (19) disposée dans la région de l'orifice (16) de l'élément de réception de capsule de gaz (15) laquelle est en prise avec la rainure (23) de la bague filetée (12).

9. Porte-capsule (9) selon l'une des revendications précédentes, **caractérisé en ce que** l'élément de réception de capsule de gaz (15) entoure par l'extérieur la bague filetée (12) au moins partiellement, de préférence totalement.

10. Porte-capsule (9) selon l'une des revendications précédentes, **caractérisé en ce que** le couvercle (17) entoure par l'extérieur la bague filetée (12) au moins partiellement, que la bague filetée (12) présente une première extrémité (27), vue le long d'un axe longitudinal (26) du porte-capsule (9), qui est orientée vers l'élément de réception de capsule de gaz (15), ainsi qu'une seconde extrémité (28) située à l'opposé et que la bague filetée (12) présente un rebord de modelage (24) dans la région de la seconde extrémité (28), dans lequel le couvercle (17) est en prise avec le rebord de modelage (24) et entoure celui-ci au moins partiellement.

11. Porte-capsule (9) selon l'une des revendications précédentes, **caractérisé en ce que** la bague filetée (12) comprend un dispositif anti-rotation, de préférence sous forme d'un moletage, sur une surface extérieure, contre la rotation par rapport au couvercle (17).

12. Porte-capsule (9) selon l'une des revendications 1 à 11, **caractérisé en ce que** le dispositif anti-rotation (21) de l'élément de réception de capsule de gaz (15), et/ou le dispositif anti-rotation de la bague filetée (12), est en prise avec une surface intérieure (18) du couvercle (17).

13. Dispositif (1) destiné à la décharge d'un milieu de décharge (4) avec un porte-capsule (9) selon l'une des revendications 1 à 12, comprenant :
• un récipient (2) s'ouvrant et se refermant au moyen d'une tête (5), lequel constitue un espace intérieur (3) pour la réception du milieu de décharge (4) ;
• un connecteur de capsule de gaz (8), lequel est disposé sur la tête (5) ;
• un bec verseur (7) par lequel le milieu de décharge (4) peut être déchargé de l'espace intérieur (3) du récipient (2) lors de l'actionnement du dispositif (1), ainsi que
• un élément d'actionnement (6), de préférence sous la forme d'un levier, pour l'actionnement du dispositif (1),
dans lequel une capsule de gaz (10) interchangeable remplie de gaz peut être disposée dans le porte-capsule (9) et le porte-capsule (9) peut être vissé avec le connecteur de capsule de gaz (8) afin d'établir et de garantir une liaison fluidique entre la capsule de gaz (10) et le dispositif (1).

14. Système comprenant un dispositif (1) selon la revendication 13 ainsi qu'une capsule de gaz (10) interchangeable remplie de gaz, dans lequel le gaz est du protoxyde d'azote (N20) ou de l'azote (N2) ou du dioxyde de carbone (CO2) ou de l'argon (Ar).
